(19) Europäisches Patentamt

European Patent Office

Office européen des brevets

(11) **EP 1 741 549 B1**

(12) **EUROPEAN PATENT SPECIFICATION**

(45) Date of publication and mention
of the grant of the patent:
**07.09.2016 Bulletin 2016/36**

(51) Int Cl.:
**B32B 27/08** (2006.01)    **B32B 1/08** (2006.01)
**B32B 27/34** (2006.01)    **F16L 11/04** (2006.01)

(21) Application number: **05736572.8**

(22) Date of filing: **26.04.2005**

(86) International application number:
**PCT/JP2005/008397**

(87) International publication number:
**WO 2005/102681 (03.11.2005 Gazette 2005/44)**

(54) **MULTILAYER HOSE FOR TRANSPORTING HIGH-TEMPERATURE CHEMICAL AND/OR GAS**

MEHRLAGIGER SCHLAUCH ZUM TRANSPORT VON HOCHTEMPERATURCHEMIKALIEN UND/ODER -GASEN

TUYAU MULTICOUCHES POUR TRANSPORTER DES PRODUITS CHIMIQUES ET/OU DU GAZ A HAUTE TEMPERATURE

(84) Designated Contracting States:
**DE FR GB IT**

(30) Priority: **27.04.2004 JP 2004132128**

(43) Date of publication of application:
**10.01.2007 Bulletin 2007/02**

(73) Proprietors:
• **Ube Industries, Ltd.
Ube-shi,
Yamaguchi-ken 755-8633 (JP)**
• **Kuraray Co., Ltd.,
Okayama 710-8622 (JP)**

(72) Inventors:
• **OGI, Toshiharu,
UBE INDUSTRIES, LTD.
Minato-ku, Tokyo 1058449 (JP)**
• **NAKAMURA, Koji,
UBE Industries, Ltd.
Ube-shi, Yamaguchi 7558633 (JP)**
• **YAMASHITA, Takashi,
KURARAY CO., LTD.
Tsukuba-shi, Ibaraki 3050841 (JP)**
• **UCHIDA, Koichi,
Ota-ku, Tokyo 143-0016 (JP)**

(74) Representative: **Hoeger, Stellrecht & Partner
Patentanwälte mbB
Uhlandstrasse 14c
70182 Stuttgart (DE)**

(56) References cited:
**EP-A- 0 445 706     JP-A- 3 007 761
JP-A- 2003 247 672     JP-A- 2004 244 579
JP-A- 2005 119 017     JP-A- 2005 178 076**

**Description**

TECHNICAL FIELD

The present invention relates to a multilayer hose for the transportation of high-temperature liquid and/or gas chemical comprised of a layer comprising an aliphatic polyamide and a layer comprising a semi-aromatic polyamide having a specific structure. More specifically, the present invention relates to a multilayer hose for the transportation of high-temperature liquid and/or gas chemical excellent in the hot water resistance, chemical resistance, durability, liquid and/or gas chemical permeation-preventing property and interlayer adhesion.

BACKGROUND ART

Along with recent development of a high-performance high-output engine, the temperature of the engine cooling water (LLC) or the temperature in the engine room is elevated and due to this or other causes, the use environment of a hose for use in an engine room is severe. In Europe, diesel gasoline is commonly used to increase the profitability or the like by reducing the fuel consumption and, similarly to the above, the hose for the transportation of diesel gasoline is used in a sever environment. Also, from the aspect of environmental protection, it is a pressing problem to remove or reduce harmful substance emissions giving rise to environmental disruption, such as nitrogen oxide or floating particulates discharged from a diesel engine. A urea solution is attracting attention as a catalyst for removing the nitrogen oxide discharged from a diesel engine, and the hose used for transporting the urea solution is similarly used in a severe environment. From these reasons, demand for a material or a composite shaped article ensuring high durability even in a severe environment is increasing.

A polyamide-based resin is excellent in the mechanical properties, heat resistance, chemical resistance and the like and therefore, this resin is widely used for bottles, tanks, hoses, pipes, pots, packing and various automobile parts such as accessories (e.g., flanges, valves, cocks).

Of the polyamide-based resins, polyamide 6 or polyamide 66, as used for general purposes, strongly interacts with water, and a halide of a metal such as calcium and zinc. Therefore, when a hose obtained by shaping polyamide 6 or polyamide 66 is in contact with such a metal halide, cracking is disadvantageously generated. Heretofore, studies have been made with an attempt to enhance the resistance of polyamide 6 or polyamide 66 against hot water, zinc chloride, calcium chloride or the like and, for example, a method using a polyamide-based resin having a specific aromatic ring structure and a method of adding a polyolefin-based resin have been proposed. However, these methods do not substantially enhance the resistance of the polyamide-based resin against hot water and chemicals such as zinc chloride and calcium chloride and moreover, the effect regarding chemical resistance at high temperatures is insufficient.

On the other hand, polyamide 11 and polyamide 12 are excellent in various properties such as hot water resistance, zinc chloride resistance and calcium chloride resistance, as compared with polyamide 6 and polyamide 66 but, in the case where the temperature in the use environment is high, their durability is not satisfactory.

Particularly, in the case where the fluid circulating in a hose for the liquid and/or gas chemical transportation is, for example, an ethylene glycol-based engine cooling liquid (LLC) for an antifreeze in the winter season, a diesel gasoline, or a urea solution sealed-in as a catalyst for removing NOx emitted from a diesel engine, the atmosphere temperature in the use environment is very high for a single-layer hose comprising polyamide 6 or polyamide 66 usually used for general purposes or comprising polyamide 11 or polyamide 12, and the liquid and/or gas chemical flowing in the piping hose permeates through the hose wall in a large amount and, as a result, replenishment of such a liquid is sometimes required for preventing a reduction in the amount of the circulating fluid. A hose excellent in the liquid and/or gas chemical permeation-preventing property and capable of preventing permeation and transpiration through the piping tube is in demand.

As a method for solving this problem, a thermoplastic resin multilayer tubular body comprised of an inner layer comprising a polyphenylene sulfide resin (PPS) excellent in the heat resistance, hot water resistance and chemical resistance and an outer layer comprising a polyamide-based resin has been proposed (see, Japanese Unexamined Patent Publication (Kokai) No. 10-180911). Basically speaking, when a polyphenylene sulfide-based resin and a polyamide-based resin are simply stacked, interlayer separation readily occurs due to a lack of adhesion property between those two materials. As for the thermoplastic resin multilayer tubular body above, there is disclosed a multilayer tubular body where a layer comprising an adhesive resin composition having blended therein a specific olefin-based copolymer and a polyamide-based resin each in a specific amount based on the polyphenylene sulfide-based resin, a layer comprising a polyphenylene sulfide-based resin, and a layer comprising a polyamide-based resin are stacked for the purpose of enhancing the interlayer adhesion. However, this multilayer tubular body still has a problem that the interlayer adhesion is not satisfactory depending on the use environment or temperature.

EP 1 695 817 A1 (post-published) discloses a multilayer structure comprising at least two or more layers including a layer (a) comprising (A) polyamide 11 and/or polyamide 12, and a layer (b) comprising (B) a polyamide (polyamide 9N) consisting of a dicarboxylic acid unit comprising a naphthalenedicarboxylic acid unit in a proportion of 50 mol% or more based on all dicarboxylic acid units and a diamine unit comprising a 1,9-nonanediamine and/or 2-methyl-1,8-octanediamine unit in a proportion of 60 mol% or more based on all diamine units.

EP 1 197 699 A2 discloses a hydrogen fuel hose having a wall composed of an inner resin layer, a thin metal layer and an outer resin layer. The inner resin layer includes at least a layer of low gas permeability and may further include a layer of low water permeability surrounded by the layer of low gas permeability. Both resin layers may include aliphatic or semi-aromatic polyamides.

An object of the present invention is to solve these problems and provide a multilayer hose for the transportation of a high-temperature liquid and/or gas chemical, which is excellent in the hot water resistance, chemical resistance, durability, interlayer adhesion and liquid and/or gas chemical permeation-preventing property, and is particularly excellent in the liquid and/or gas chemical permeation-preventing properties at high temperatures.

More specifically, the present invention relates to the followings.

(1) A multilayer hose for the transportation of a high-temperature liquid and/or gas chemical at a temperature of 50 °C or more, comprising at least two or more layers including:

a layer (a) comprising (A) an aliphatic polyamide, and
a layer (b) comprising (B) a semi-aromatic polyamide which comprises a diamine unit containing an aliphatic diamine unit having a carbon number of 9 to 13 in an amount of 60 mol% or more based on all diamine units and a dicarboxylic acid unit containing a terephthalic acid unit in an amount of 50 mol% or more based on all dicarboxylic acid units,

wherein the layers are formed by coextrusion, and
wherein the multilayer hose does not comprise a layer comprising a fluorine-containing polymer having introduced into the molecular chain thereof a functional group having reactivity with a polyamide-based resin.
(2) The multilayer hose for the transportation of a high-temperature liquid and/or gas chemical as described above, wherein the layer (b) comprising (B) a semi-aromatic polyamide which comprises a diamine unit containing an aliphatic diamine unit having a carbon number of 9 to 13 in an amount of 60 mol% or more based on all diamine units and a dicarboxylic acid unit containing a terephthalic acid unit in an amount of 50 mol% or more based on all dicarboxylic acid units is disposed as the innermost layer, and the layer (a) comprising (A) an aliphatic polyamide is disposed on the outer side with respect to the layer (b).
(3) The multilayer hose for the transportation of a high-temperature liquid and/or gas chemical as described in (1) or (2) above, wherein the (A) aliphatic polyamide is at least one homopolymer selected from the group consisting of polycaproamide (polyamide 6), polyhexamethylene adipamide (polyamide 66), polyhexamethylene dodecamide (polyamide 612), polyundecanamide (polyamide 11) and polydodecanamide (polyamide 12), or a copolymer using a plurality of species of raw material monomers forming these polyamides.
(4) The multilayer hose for the transportation of a high-temperature liquid and/or gas chemical as described in any one of (1) to (3) above, wherein the (B) semi-aromatic polyamide is a polyamide comprising a diamine unit containing a 1,9-nonanediamine and/or 2-methyl-1,8-octanediamine unit or a 1,12-dodecanediamine unit in an amount of 60 mol% or more based on all diamine units and a dicarboxylic acid unit containing a terephthalic acid unit in an amount of 50 mol% or more based on all dicarboxylic acid units.
(5) The multilayer hose for the transportation of a high-temperature liquid and/or gas chemical as described in any one of (1) to (4) above, which is any one of an engine cooling liquid (LLC) hose, a diesel gasoline hose, an oil drilling hose, an alcohol-containing gasoline transportation hose and a urea solution transportation hose.
(6) The multilayer hose for the transportation of a high-temperature liquid and/or gas chemical as described any one of (1) to (5) above, wherein the layer (a) and the layer (b) are adjacently disposed.

The multilayer hose for the transportation of a high-temperature liquid and/or gas chemical of the present invention is excellent in the hot water resistance, chemical resistance, durability, interlayer adhesion and liquid and/or gas chemical permeation-preventing property, particularly excellent in the liquid and/or gas chemical permeation-preventing property at high temperatures. Accordingly, even in the case of involving direct contact with a liquid and/or gas chemical under high-temperature conditions, the multilayer hose can be used for a long time and its utility value is very high.

BRIEF DESCRIPTION OF THE DRAWINGS

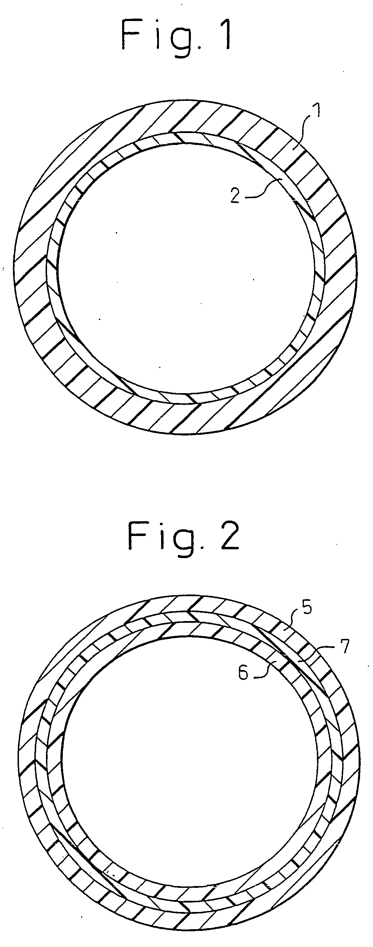

Figs. 1 and 2 each is a transverse cross-sectional view showing the multilayer hose for the transportation of a high-temperature liquid and/or gas chemical of the present invention.

## BEST MODE FOR CARRYING OUT THE INVENTION

The present invention is described in detail below.

The (A) aliphatic polyamide for use in the present invention contains an amide bond (-NHCO-) in the main chain and comprises an aliphatic polyamide-forming unit. The (A) aliphatic polyamide can be obtained by using, as the raw material, a lactam, an aminocarboxylic acid or a nylon salt comprising an aliphatic diamine and an aliphatic dicarboxylic acid, and polymerizing or copolymerizing it by a known method such as melt polymerization, solution polymerization or solid phase polymerization.

Examples of the lactam include caprolactam, enantholactam, undecanelactam, dodecanelactam, α-pyrrolidone and α-piperidone. Examples of the aminocarboxylic acid include 6-aminocaproic acid, 7-aminoheptanoic acid, 9-aminononanoic acid, 11-aminoundecanoic acid and 12-aminododecanoic acid. One species or two or more species thereof may be used.

Examples of the aliphatic diamine constituting the nylon salt include ethylenediamine, 1,3-propylenediamine, 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, 1,13-tridecanediamine, 1,14-tetradecanediamine, 1,15-pentadecanediamine, 1,16-hexadecanediamine, 1,17-heptadecanediamine, 1,18-octadecanediamine, 1,19-nonadecanediamine, 1,20-eicosanediamine, 2/3-methyl-1,5-pentanediamine, 2-methyl-1,8-octanediamine, 2,2,4/2,4,4-trimethyl-1,6-hexanediamine and 5-methyl-1,9-nonanediamine. One species or two or more species thereof may be used.

Examples of the aliphatic dicarboxylic acid constituting the nylon salt include adipic acid, pimelic acid, suberic acid, azelaic acid, sebacic acid, undecanedicarboxylic acid, dodecanedicarboxylic acid, tridecanedicarboxylic acid, tetradecanedicarboxylic acid, pentadecanedicarboxylic acid, hexadecanedicarboxylic acid, octadecanedicarboxylic acid and eicosanedicarboxylic acid. One species or two or more species thereof may be used.

Examples of the (A) aliphatic polyamide for use in the present invention include a homopolymer such as polycaproamide (polyamide 6), polyundecanamide (polyamide 11), polydodecanamide (polyamide 12), polyethyleneadipamide (polyamide 26), polytetramethylene adipamide (polyamide 46), polyhexamethylene adipamide (polyamide 66), polyhexamethylene azelamide (polyamide 69), polyhexamethylene sebacamide (polyamide 610), polyhexamethylene undecamide (polyamide 611), polyhexamethylene dodecamide (polyamide 612), polynonamethylene adipamide (polyamide 96), polynonamethylene azelamide (polyamide 99), polynonamethylene sebacamide (polyamide 910), polynonamethylene undecamide (polyamide 911), polynonamethylene dodecamide (polyamide 912), polydecamethylene adipamide (polyamide 106), polydecamethylene azelamide (polyamide 109), polydecamethylene sebacamide (polyamide 1010), polydecamethylene dodecamide (polyamide 1012), polydodecamethylene adipamide (polyamide 126), polydodecamethylene azelamide (polyamide 129), polydodecamethylene sebacamide (polyamide 1210) and polydodecamethylene dodecamide (polyamide 1212), and a copolymer using a plurality of species of raw material monomers forming these polyamides.

Among these, preferred are at least one homopolymer selected from the group consisting of polycaproamide (polyamide 6), polyhexamethylene adipamide (polyamide 66), polyundecanamide (polyamide 11), polydodecanamide (polyamide 12) and polyhexamethylene dodecamide (polyamide 612), and a copolymer using a plurality of species of raw material monomers forming these polyamides. In view of heat resistance and cost, homopolymers of polycarproamide (polyamide 6) and polyhexamethylene adipamide (polyamide 66) are more preferred, and in view of resistance against hot water, zinc chloride and calcium chloride, homopolymers of polyundecanamide (polyamide 11), polydodecanamide (polyamide 12) and polyhexamethylene dodecamide (polyamide 612) are more preferred.

The (A) aliphatic polyamide for use in the present invention may be a mixture of those homopolymers, a mixture of those copolymers, or a mixture of the homopolymer and the copolymer, or may also be a mixture with other polyamide-based resin or other thermoplastic resin. In the mixture, the content of the (A) aliphatic polyamide is preferably 60 wt% or more, more preferably 80 wt% or more.

Examples of the other polyamide-based resin include polymetaxylylene adipamide (polyamide MXD6), polymetaxylylene suberamide (polyamide MXD8), polymetaxylylene azelamide (polyamide MXD9), polymetaxylylene sebacamide (polyamide MXD10), polymetaxylylene dodecamide (polyamide MXD12), polymetaxylylene terephthalamide (polyamide MXDT), polymetaxylylene isophthalamide (polyamide MXDI), polymetaxylylene naphthalamide (polyamide MXDN), polybis(4-aminocyclohexyl)methane dodecamide (polyamide PACM12), polybis(4-aminocyclohexyl)methane terephthalamide (polyamide PACMT), polybis(4-aminocyclohexyl)methane isophthalamide (polyamide PACMI), polybis(3-methyl-4-aminocyclohexyl)methane dodecamide (polyamide dimethyl PACM12), polyisophorone adipamide (polyamide IPD6), polyisophorone terephthalamide (polyamide IPDT), polyhexamethylene terephthalamide (polyamide 6T), polyhexamethylene isophthalamide (polyamide 6I), polynonamethylene isophthalamide (polyamide 9I), polynonamethylene hexahydroterephthalamide (polyamide 9T(H)), polydecamethylene isophthalamide (polyamide 10I), polydecamethylene hexahydroterephthalamide (polyamide 10T(H)), polyundecamethylene isophthalamide (polyamide 11I), polyundecamethylene hexahydroterephthalamide (polyamide 11T(H)), polydodecamethylene isophthalamide (polyamide 12I), polydodecamethylene hexahydroterephthalamide (polyamide 12T(H)), and a copolymer using a plurality of species of raw material monomers of these polyamides and/or raw material monomers of the above-described aliphatic polyamides. One species or two or more species thereof may be used.

Examples of the other thermoplastic resin include a polyolefin-based resin such as high-density polyethylene (HDPE), medium-density polyethylene (MDPE), low-density polyethylene (LDPE), linear low-density polyethylene (LLDPE), ultrahigh molecular weight polyethylene (UHMWPE), polypropylene (PP), ethylene/propylene copolymer (EPR), ethylene/butene copolymer (EBR), ethylene/vinyl acetate copolymer (EVA), ethylene/vinyl acetate copolymer saponified product (EVOH), ethylene/acrylic acid copolymer (EAA), ethylene/methacrylic acid copolymer (EMAA), ethylene/methyl acrylate copolymer (EMA), ethylene/methyl methacrylate copolymer (EMMA) and ethylene/ethyl acrylate copolymer (EEA); the above-described polyolefin-based resin where a functional group such as carboxyl group or its salt, acid anhydride group and epoxy group is incorporated; a polyester-based resin such as polybutylene terephthalate (PBT), polyethylene terephthalate (PET), polyethylene isophthalate (PEI), PET/PEI copolymer, polyarylate (PAR), polyethylene naphthalate (PEN), polybutylene naphthalate (PBN) and liquid crystal polyester (LCP); a polyether-based resin such as polyacetal (POM) and polyphenylene oxide (PPO); a polysulfone-based resin such as polysulfone (PSF) and polyether sulfone (PES); a polythioether-based resin such as polyphenylene sulfide (PPS) and polythioethersulfone (PTES); a polyketone-based resin such as polyether ether ketone (PEEK) and polyallyl ether ketone (PAEK); a polynitrile-based resin such as polyacrylonitrile (PAN), polymethacrylonitrile, acrylonitrile/styrene copolymer (AS), methacrylonitrile/styrene copolymer, acrylonitrile/butadiene/styrene copolymer (ABS) and methacrylonitrile/styrene/butadiene copolymer (MBS); a polymethacrylate-based resin such as polymethyl methacrylate (PMMA) and polyethyl methacrylate (PEMA); a polyvinyl-based resin such as polyvinyl alcohol (PVA), polyvinylidene chloride (PVDC), polyvinyl chloride (PVC), vinyl chloride/vinylidene chloride copolymer and vinylidene chloride/methyl acrylate copolymer; a cellulose-based resin such as cellulose acetate and cellulose butyrate; a fluorine-based resin such as polyvinylidene fluoride (PVDF), polyvinyl fluoride (PVF), polychlorofluoroethylene (PCTFE), tetrafluoroethylene/ethylene copolymer (ETFE), ethylene/chlorotrifluoroethylene copolymer (ECTFE), tetrafluoroethylene/hexafluoropropylene copolymer (TFE/HFP, FEP), tetrafluoroethylene/hexafluoropropylene/vinylidene fluoride copolymer (TFE/HFP/VDF, THV) and tetrafluoroethylene/fluoro(alkylvinylether) copolymer (PFA); a polycarbonate-based resin such as polycarbonate (PC); a polyimide-based resin such as thermoplastic polyimide (PI), polyamideimide (PAI) and polyether imide; and a thermoplastic polyurethane-based resin. One species or two or more species thereof may be used.

In the (A) aliphatic polyamide for use in the present invention, an impact resistance improver is preferably added. The impact resistance improver includes a rubber-like polymer, and a polymer having a flexural modulus of 500 MPa or less as measured according to ASTM D-790 is preferred. If the flexural modulus is higher than this value, the polymer is sometimes improper as the impact resistance improver.

Examples of the impact resistance improver include an (ethylene and/or propylene)/$\alpha$-olefin-based copolymer, an (ethylene and/or propylene)/($\alpha$,$\beta$-unsaturated carboxylic acid and/or unsaturated carboxylic acid ester)-based copolymer, an ionomeric polymer and an aromatic vinyl compound/conjugated diene compound-based block copolymer. One species or two or more species thereof may be used.

The (ethylene and/or propylene)/$\alpha$-olefin-based copolymer is a polymer obtained by copolymerizing an ethylene and/or propylene with an $\alpha$-olefin having a carbon number of 3 or more. Examples of the $\alpha$-olefin having a carbon number of 3 or more include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene and 12-ethyl-1-tetradecene. One species or two or more species thereof may be used.

Also, a polyene of a non-conjugated diene such as 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, cyclooctadiene, 5-vinylnorbornene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene and 2-propenyl-2,5-norbornadiene, may be copolymerized. One species or two or more species thereof may be used.

The (ethylene and/or propylene)/($\alpha$,$\beta$-unsaturated carboxylic acid and/or unsaturated carboxylic acid ester)-based copolymer is a polymer obtained by copolymerizing an ethylene and/or propylene with an $\alpha$,$\beta$-unsaturated carboxylic acid and/or unsaturated carboxylic acid ester monomer. Examples of the $\alpha$,$\beta$-unsaturated carboxylic acid monomer include an acrylic acid and a methacrylic acid, and examples of the $\alpha$,$\beta$-unsaturated carboxylic acid ester monomer include a methyl ester, an ethyl ester, a propyl ester, a butyl ester, a pentyl ester, a hexyl ester, a heptyl ester, an octyl ester, a nonyl ester and a decyl ester of those unsaturated carboxylic acids. One species or two or more species thereof may be used.

The ionomeric polymer is a copolymer of an olefin and an $\alpha$,$\beta$-unsaturated carboxylic acid, where at least a part of the carboxyl group is ionized by the neutralization of a metal ion. The olefin is preferably an ethylene and the $\alpha,\beta$-unsaturated carboxylic acid is preferably an acrylic acid or a methacrylic acid. However, the ionomeric polymer is not limited thereto and an unsaturated carboxylic acid ester monomer may be copolymerized. Examples of the metal ion include an alkali metal and an alkaline earth metal, such as Li, Na, K, Mg, Ca, Sr and Ba, and ions such as Al, Sn, Sb, Ti, Mn, Fe, Ni, Cu, Zn and Cd. One species or two or more species thereof may be used.

The aromatic vinyl compound/conjugated diene compound-based block copolymer is a block copolymer comprising an aromatic vinyl compound-based polymer block and a conjugated diene-based polymer block. A block copolymer having at least one aromatic vinyl compound-based polymer block and at least one conjugated diene-based polymer block is used. In this block copolymer, an unsaturated bond in the conjugated diene-based polymer block may be hydrogenated.

The aromatic vinyl compound-based polymer block is a polymer block mainly comprising a structural unit derived from an aromatic vinyl compound. Examples of the aromatic vinyl compound include styrene, $\alpha$-methylstyrene, o-methylstyrene, m-methylstyrene, p-methylstyrene, 2,4-dimethylstyrene, vinylnaphthalene, vinylanthracene, 4-propylstyrene, 4-cyclohexylstyrene, 4-dodecylstyrene, 2-ethyl-4-benzylstyrene and 4-(phenylbutyl)styrene. One species or two or more species thereof may be used. Depending on the case, the aromatic vinyl compound-based polymer block may have a structural unit comprising a slight amount of other unsaturated monomer. The conjugated diene-based polymer block is a polymer block formed from one species or two or more species of conjugated diene compounds such as 1,3-butadiene, chloroprene, isoprene, 2,3-dimethyl-1,3-butadiene, 1,3-pentadiene, 4-methyl-1,3-pentadiene and 1,3-hexadiene. In the hydrogenated aromatic vinyl compound/conjugated diene compound-based block copolymer, the unsaturated bond moiety in the conjugated diene-based polymer block is partially or entirely hydrogenated to form a saturated bond.

The molecular structure of the aromatic vinyl compound/conjugated diene compound-based block copolymer or a hydrogenated product thereof may be linear, branched or radial or may be an arbitrary combination thereof. Among these aromatic vinyl compound/conjugated diene compound-based block copolymers and/or a hydrogenated product thereof, preferred are one species or two or more species of a diblock copolymer where one aromatic vinyl compound-based polymer block and one conjugated diene-based polymer block are linearly bonded, a triblock copolymer where three polymer blocks are linearly bonded in the order of aromatic vinyl compound-based polymer block-conjugated diene-based polymer block-aromatic vinyl compound-based polymer block, and a hydrogenated product thereof. Examples thereof include an unhydrogenated or hydrogenated styrene/butadiene block copolymer, an unhydrogenated or hydrogenated styrene/isoprene block copolymer, an unhydrogenated or hydrogenated styrene/isoprene/styrene block copolymer, an unhydrogenated or hydrogenated styrene/butadiene/styrene block copolymer, and an unhydrogenated or hydrogenated styrene/isoprene/butadiene/styrene block copolymer.

The (ethylene and/or propylene)/$\alpha$-olefin-based copolymer, (ethylene and/or propylene)/($\alpha,\beta$-unsaturated carboxylic acid and/or unsaturated carboxylic acid ester)-based copolymer, ionomeric polymer, aromatic vinyl compound/conjugated diene compound-based block copolymer and the like, which are used as the impact resistance improver, are preferably a polymer modified with a carboxylic acid and/or a derivative thereof. By the modification with such a component, a functional group having affinity for the polyamide resin is incorporated into the polymer molecule.

Examples of the functional group having affinity for the polyamide resin include a carboxylic acid group, an acid anhydride group, a carboxylic acid ester group, a carboxylic acid metal salt, a carboxylic acid imide group, a carboxylic acid amide group and an epoxy group. Examples of the compound containing such a functional group include an acrylic acid, a methacrylic acid, a maleic acid, a fumaric acid, an itaconic acid, a crotonic acid, a mesaconic acid, a citraconic acid, a glutaconic acid, a cis-4-cyclohexene-1,2-dicarboxylic acid, an endo-bicyclo[2.2.1]-5-heptene-2,3-dicarboxylic acid, a metal salt of these carboxylic acids, a monomethyl maleate, a monomethyl itaconate, a methyl acrylate, an ethyl acrylate, a butyl acrylate, a 2-ethylhexyl acrylate, a hydroxyethyl acrylate, a methyl methacrylate, a 2-ethylhexyl methacrylate, a hydroxyethyl methacrylate, an aminoethyl methacrylate, a dimethyl maleate, a dimethyl itaconate, a maleic anhydride, an itaconic anhydride, a citraconic anhydride, an endo-bicyclo-[2.2.1]-5-heptene-2,3-dicarboxylic anhydride, a maleimide, an N-ethylmaleimide, an N-butylmaleimide, an N-phenylmaleimide, an acrylamide, a methacrylamide, a glycidyl acrylate, a glycidyl methacrylate, a glycidyl ethacrylate, a glycidyl itaconate and a glycidyl citraconate. One species or two or more species thereof may be used.

The amount of the impact resistance improver blended is preferably from 1 to 35 parts by weight, more preferably from 5 to 25 parts by weight, per 100 parts by weight of the (A) aliphatic polyamide component. If the amount of the impact resistance improver blended exceeds 35 parts by weight, the mechanical properties inherent to the multilayer hose for the transportation of high-temperature liquid and/or gas chemical may be impaired.

In the case where the (A) aliphatic polyamide for use in the present invention is a polyamide having a relatively small number of carbons per one amide group in the polyamide repeating unit, such as polyamide 6 or polyamide 66, a polyamide comprising an aliphatic diamine and a terephthalic acid and/or an isophthalic acid as the polyamide-forming units is preferably blended so as to enhance the calcium chloride resistance. As for the aliphatic diamine used here, 1,6-hexanediamine is preferably selected in view of compatibility with polyamide 6 or polyamide 66. A terephthalic acid and an isophthalic acid are used at an arbitrary ratio, but the ratio of terephthalic acid/isophthalic acid is preferably from 80/20 to 20/80 (by weight).

The polyamide comprising an aliphatic diamine and a terephthalic acid and/or an isophthalic acid as the polyamide-forming units may be a polymer where these polyamide-forming units occupy 100 wt%, or may be a copolymer comprising 85 wt% or more of said polyamide-forming units and 15 wt% or less of a polyamide-forming unit introduced from other components, for example, a lactam, an aminocarboxylic acid, a dicarboxylic acid except for a terephthalic acid and an isophthalic acid, and a diamine. As for the other copolymerization unit, a polyamide composed of a hexamethylene adipamide unit and/or a caproamide unit is particularly preferred.

In the (A) aliphatic polyamide, an antioxidant, a heat stabilizer, an ultraviolet absorbent, a light stabilizer, a lubricant, an inorganic filler, an antistatic agent, a flame retardant, a crystallization accelerator, a coloring agent, a plasticizer and the like may be further added, if desired.

The production apparatus used for the production of the (A) aliphatic polyamide includes a known polyamide production apparatus such as batch-system reactor, one-bath or multi-bath continuous reaction apparatus, tubular continuous reaction apparatus and kneading reaction extruder (e.g., single-screw kneading extruder, twin-screw kneading extruder). The polymerization may be performed by using a known polymerization method such as melt polymerization, solution polymerization or solid phase polymerization, and repeating the operation under atmospheric pressure, reduced pressure or applied pressure. These polymerization methods may be used individually or in an appropriate combination.

The relative viscosity of the (A) aliphatic polyamide as measured according to JIS K-6920 is preferably from 1.5 to 5.0, more preferably from 2.0 to 4.5. If the relative viscosity of the (A) aliphatic polyamide is less than the above-described value, the obtained multilayer hose for the transportation of high-temperature liquid and/or gas chemical may have insufficient mechanical properties, whereas if it exceeds the above-described value, the extrusion pressure or torque becomes excessively high and this sometimes makes it difficult to produce a multilayer hose for the transportation of high-temperature liquid and/or gas chemical.

The (B) semi-aromatic polyamide for use in the present invention is a polyamide comprising a diamine unit containing an aliphatic diamine unit having a carbon number of 9 to 13 in an amount of 60 mol% or more based on all diamine units and a dicarboxylic acid unit containing a terephthalic acid unit in an amount of 50 mol% or more based on all dicarboxylic acid units (hereinafter sometimes referred to as a "semi-aromatic polyamide").

In the (B) semi-aromatic polyamide, the content of the unit comprising a terephthalic acid and/or a naphthalenedicarboxylic acid is 50 mol% or more, preferably 60 mol% or more, more preferably 75 mol% or more, still more preferably 90 mol% or more, based on all dicarboxylic acid units. If the content of the terephthalic acid unit is less than 50 mol%, the obtained multilayer hose for the transportation of high-temperature liquid and/or gas chemical tends to be deteriorated in various physical properties such as heat resistance, chemical resistance and liquid and/or gas chemical permeation-preventing property.

The dicarboxylic acid unit in the (B) semi-aromatic polyamide may contain other dicarboxylic acid unit except for the unit derived from a terephthalic acid, within the range of not impairing various excellent properties of the multilayer hose for the transportation of high-temperature liquid and/or gas chemical of the present invention. Examples of the other dicarboxylic acid unit include units derived from an aliphatic dicarboxylic acid such as malonic acid, dimethylmalonic acid, succinic acid, glutaric acid, adipic acid, 2-methyladipic acid, 2,2,4/2,4,4-trimethyladipic acid, pimelic acid, 2,2-dimethylglutaric acid, 2,2-diethylsuccinic acid, suberic acid, azelaic acid, sebacic acid, undecanedicarboxylic acid and dodecanedicarboxylic acid; an alicyclic dicarboxylic acid such as 1,3-cyclopentanedicarboxylic acid and 1,3/1,4-cyclohexanedicarboxylic acid; and an aromatic dicarboxylic acid such as isophthalic acid, 1,3/1,4-phenylenedioxydiacetic acid, diphenic acid, 4,4'-oxydibenzoic acid, diphenylmethane-4,4'-dicarboxylic acid, diphenylethane-4,4'-dicarboxylic acid, diphenylpropane-4,4'-dicarboxylic acid, diphenylsulfone-4,4'-dicarboxylic acid and 4,4'-biphenyldicarboxylic-acid. One species or two or more species thereof may be used. Among these units, a unit derived from an aromatic dicarboxylic acid is preferred. The content of the other dicarboxylic acid unit is 50 mol% or less, preferably 40 mol% or less, more preferably 25 mol% or less, still more preferably 10 mol% or less. In addition, a polyvalent carboxylic acid such as trimellitic acid, trimesic acid and pyromellitic acid may also be used within the range allowing for melt shaping.

In the (B) semi-aromatic polyamide, the content of the aliphatic diamine unit having a carbon number of 9 to 13 is 60 mol% or more, preferably 75 mol% or more, more preferably 90 mol% or more, based on all diamine units. If the content of the aliphatic diamine unit having a carbon number of 9 to 13 is less than 60 mol%, the multilayer hose for the transportation of high-temperature liquid and/or gas chemical tends to be deteriorated in the heat resistance, chemical resistance and impact resistance.

The aliphatic diamine unit having a carbon number of 9 to 13 includes units derived from 1,9-nonanediamine, 1,10-decanediamine, 1,11-undecanediamine, 1,12-dodecanediamine and 1,13-tridecanediamine. As long as the above-described carbon number is satisfied, not only a linear aliphatic diamine unit but also a unit derived from a branched aliphatic diamine such as 2,2,4/2,4,4-trimethyl-1,6-hexanediamine, 2,4-diethyl-1,6-hexanediamine, 2,2/2,3/2,4/2,5-dimethyl-heptanediamine, 2/3/4-methyl-1,8-octanediamine, 1,3/1,4/2,2/2,4/3,3/3,4/4,4/4,5-dimethyl-1,8-octanediamine, 5-methyl-1,9-nonanediamine and 2/3-butyl-1,8-octanediamine, may be contained. One species or two or more species thereof may be used.

Among these aliphatic diamine units having a carbon number of 9 to 13, in view of liquid and/or gas chemical permeation-preventing property, units derived from 1,9-nonanediamine and/or 2-methyl-1,8-octanediamine are preferred. In view of low temperature impact resistance, units derived from 1,12-dodecanediamine are preferred. Furthermore, in view of balance among shapability, impact resistance and coextrusion formability, the molar ratio of the 1,9-nonanediamine unit and the 2-methyl-1,8-octanediamine unit is preferably from 30:70 to 98:2 mol%, more preferably from 40:60 to 95:5 mol%.

The diamine unit in the (B) semi-aromatic polyamide may contain other diamine unit except for the unit derived from an aliphatic diamine having a carbon number of 9 to 13, within the range of not impairing various excellent properties of the multilayer hose for the transportation of high-temperature liquid and/or gas chemical of the present invention. Examples of the other diamine unit include units derived from an aliphatic diamine such as ethylenediamine, 1,3-propylenediamine, 1,4-butanediamine, 1,6-hexanediamine, 1,8-octanediamine, 2-methyl-1,5-pentanediamine, 3-methyl-1,5-pentanediamine; an alicyclic diamine such as 1,3/1,4-cyclohexanediamine, 1,3/1,4-cyclohexanedimethylamine, bis(4-aminocyclohexyl)methane, bis(4-aminocyclohexyl)propane, bis(3-methyl-4-aminocyclohexyl)methane, bis(3-methyl-4-aminocyclohexyl)propane, 5-amino-2,2,4-trimethyl-1-cyclopentanemethylamine, 5-amino-1,3,3-trimethylcyclohexanemethylamine, bis(aminopropyl)piperazine, bis(aminoethyl)piperazine, norbornanedimethylamine and tricyclodecanedimethylamine; and an aromatic diamine such as para-phenylenediamine, meta-phenylenediamine, para-xylylenediamine, metaxylylenediamine, 1,4/1,5/2,6/2,7-naphthalenedimethylamine, 4,4'-diaminodiphenylmethane, 2,2-bis(4-aminophenyl)propane, 4,4'-diaminodiphenylsulfone and 4,4'-diaminodiphenyl ether. One species or two or more species thereof may be used. The content of the other diamine unit is 40 mol% or less, preferably 25 mol% or less, more preferably 10 mol% or less.

The relative viscosity of the (B) semi-aromatic polyamide as measured according to JIS K-6920 is preferably from 1.5 to 4.0, more preferably from 1.8 to 3.5, still more preferably from 2.0 to 3.0. If the relative viscosity is less than the above-described value, the obtained multilayer hose for the transportation of high-temperature liquid and/or gas chemical may have insufficient mechanical properties, whereas if it exceeds the above-described value, the extrusion pressure or torque becomes excessively high and this sometimes makes it difficult to produce a multilayer hose for the transportation of high-temperature liquid and/or gas chemical.

In the (B) semi-aromatic polyamide, the terminal of its molecular chain is preferably blocked by a terminal-blocking agent. The terminal-blocking agent preferably blocks 40% or more, more preferably 60% or more, of the terminal group.

The terminal-blocking agent is not particularly limited as long as it is a monofunctional compound having reactivity with an amino or carboxyl group at the polyamide terminal. In view of reactivity, stability of the blocked terminal or the like, a monocarboxylic acid or a monoamine is preferred, and in view of easy handleability or the like, a monocarboxylic acid is more preferred. In addition, an acid anhydride, a monoisocyanate, a monoacid halide, a monoester, a monoalcohol and the like may also be used.

The monocarboxylic acid used as the terminal-blocking agent is not particularly limited as long as it has reactivity with an amino group, but examples thereof include an aliphatic monocarboxylic acid such as acetic acid, propionic acid, butyric acid, valeric acid, caproic acid, caprylic acid, lauric acid, tridecylic acid, myristic acid, palmitic acid, stearic acid, pivalic acid and isobutyric acid; an alicyclic monocarboxylic acid such as cyclohexanecarboxylic acid; and an aromatic monocarboxylic acid such as benzoic acid, toluic acid, $\alpha$-naphthalenecarboxylic acid, $\beta$-naphthalenecarboxylic acid, methylnaphthalenecarboxylic acid and phenylacetic acid. One species or two or more species thereof may be used. Among these, in view of reactivity, stability of the blocked terminal, cost and the like, an acetic acid, a propionic acid, a butyric acid, a valeric acid, a caproic acid, a caprylic acid, a lauric acid, a tridecylic acid, a myristic acid, a palmitic acid, a stearic acid and a benzoic acid are preferred.

The monoamine used as the terminal-blocking agent is not particularly limited as long as it has reactivity with a carboxyl group, but examples thereof include an aliphatic monoamine such as methylamine, ethylamine, propylamine, butylamine, hexylamine, octylamine, decylamine, stearylamine, dimethylamine, diethylamine, dipropylamine and dibutylamine; an alicyclic monoamine such as cyclohexylamine and dicyclohexylamine; and an aromatic amine such as aniline, toluidine, diphenylamine and naphthylamine. One species or two or more species thereof may be used. Among these, in view of reactivity, boiling point, stability of the blocked terminal, cost and the like, butylamine, hexylamine, octylamine, decylamine, stearylamine, cyclohexylamine and aniline are preferred.

The amount of the terminal-blocking agent used at the production of the (B) semi-aromatic polyamide is determined by the relative viscosity of the finally obtained polyamide and the blocking percentage of the terminal group. Specifically, the terminal-blocking agent is usually used in an amount of 0.3 to 10 mol% based on the total molar number of dicarboxylic acid and diamine as raw materials, though this varies depending on the reactivity and boiling point of the terminal-blocking agent used, the reaction apparatus, the reaction conditions and the like.

The production apparatus for the (B) semi-aromatic polyamide includes a known polyamide production apparatus such as batch-system reactor, one-bath or multi-bath continuous reaction apparatus, tubular continuous reaction apparatus and kneading reaction extruder (e.g., single-screw kneading extruder, twin-screw kneading extruder). The polymerization may be performed by using a known polymerization method such as melt polymerization, solution polymerization or solid phase polymerization, and repeating the operation under atmospheric pressure, reduced pressure or applied pressure. These polymerization methods may be used individually or in an appropriate combination.

The (B) semi-aromatic polyamide may be a mixture with the above-described other polyamide-based resin or other thermoplastic resin or may be even a mixture with the (A) aliphatic polyamide for use in the present invention. The content of the (B) semi-aromatic polyamide in the mixture is preferably 80 wt% or more.

In the (B) semi-aromatic polyamide, a copper compound is preferably blended so as to enhance the long-term heat resistance. Examples of the copper compound include cuprous chloride, cupric chloride, cuprous bromide, cupric bromide, cuprous iodide, cupric iodide, cupric sulfate, cupric nitrate, cupric phosphate, cupric pyrophosphate, cuprous acetate, cupric acetate, cupric salicylate, cupric stearate, cupric benzoate, and a complex salt of the above-described inorganic copper halide with xylylenediamine, 2-mercaptobenzimidazole, 2-mercaptobenzothiazole, benzimidazole or the like. One species or two or more species thereof may be used.

The amount of the copper compound blended is preferably from 0.01 to 3 parts by weight, more preferably from 0.02 to 1 part by weight, per 100 parts by weight of the (B) semi-aromatic polyamide component. If the amount of the copper compound blended is less than 0.01 part by weight, the obtained multilayer hose for the transportation of high-temperature liquid and/or gas chemical may have poor heat resistance, whereas if it exceeds 3 parts by weight, release of a metal salt is generated during melt forming of a multilayer hose for the transportation of high-temperature liquid and/or gas chemical and the product value may be impaired due to coloring.

In the (B) semi-aromatic polyamide, an alkali metal halide compound may also be added in the form of combination use with the copper compound. Examples of the alkali metal halide compound include lithium chloride, lithium bromide, lithium iodide, lithium fluoride, sodium chloride, sodium bromide, sodium iodide, potassium chloride, potassium bromide, potassium iodide and potassium fluoride. One species or two or more species thereof may be used. Among these, potassium iodide is preferred. The amount of the alkali metal halide compound blended is preferably from 0.01 to 10 parts by weight, more preferably from 0.02 to 3 parts by weight, per 100 parts by weight of the (B) semi-aromatic polyamide compound, and at the same time, still more preferably from 100 to 1,000 parts by weight per 100 parts by weight of the copper compound.

For the purpose of enhancing the long-term heat resistance, the above-described copper compound and alkali metal halide compound are preferably blended also in the (A) aliphatic polyamide. In the case where the (A) aliphatic polyamide is a polyamide having a relatively small number of carbons per one amide group in the polyamide repeating unit, such as polyamide 6 or polyamide 66, the (B) semi-aromatic polyamide may be blended for the purpose of enhancing the calcium chloride resistance.

In the (B) semi-aromatic polyamide, an antioxidant, a heat stabilizer, an ultraviolet absorbent, a light stabilizer, a lubricant, an inorganic filler, an antistatic agent, a flame retardant, a crystallization accelerator, a plasticizer, a coloring agent, a lubricant agent, an impact resistance improver and the like may be further added, if desired. In order to improve the impact resistance of the (B) semi-aromatic polyamide, an impact resistance improver is preferably added. As for the impact resistance improver, a rubber-like polymer having a flexural modulus of 500 MPa or less as measured according to ASTM D-790, which is described in the (A) aliphatic polyamide, is more preferably added.

The multilayer hose for the transportation of high-temperature liquid and/or gas chemical of the present invention comprises at least two layers including a layer (a) comprising (A) an aliphatic polyamide and a layer (b) comprising (B) a semi-aromatic polyamide which comprises a diamine unit containing an aliphatic diamine unit having a carbon number of 9 to 13 in an amount of 60 mol% or more based on all diamine units and a dicarboxylic acid unit containing a terephthalic acid and/or naphthalenedicarboxylic acid unit in an amount of 50 mol% or more based on all dicarboxylic acid units.

In a preferred embodiment, the layer (b) comprising (B) a semi-aromatic polyamide is disposed as the innermost layer, and the layer (a) comprising (A) an aliphatic polyamide is disposed on the outer side with respect to the layer (b). A structure where from the aspect of hot water resistance, liquid and/or gas chemical permeation-preventing property, chemical resistance and the like, the layer (b) comprising (B) a semi-aromatic polyamide is disposed as the innermost layer and from the aspect of balance of the physical properties including low-temperature impact resistance of the hose, the layer (a) comprising (A) an aliphatic polyamide is disposed as the outermost layer, is more preferred. Furthermore, in view of use at high temperatures, a structure comprising three or more layers, where the layer (b) comprising (B) a semi-aromatic polyamide is disposed as the innermost and outermost layers and the layer (a) comprising (A) an aliphatic polyamide is disposed as the intermediate layer, may also be employed. Figs. 1 and 2 each is a transverse cross-sectional view showing an example of the multilayer hose for the transportation of a high-temperature liquid and/or gas chemical according to the present invention. Fig. 1 shows a two-layer multilayer hose and Fig. 2 shows a three-layer multilayer hose. In Fig. 1, reference numeral 1 indicates a layer (a) as the outer side layer and 2 indicates a layer (b) as the inner side layer. In Fig. 2, reference numeral 5 indicates a layer (b) as the outermost layer, 6 indicates a layer (b) as the innermost layer, and 7 indicates a layer (a) as the intermediate layer.

In the multilayer hose for the transportation of a high-temperature liquid and/or gas chemical of the present invention, it is essential to contain a layer (b) comprising (B) a semi-aromatic polyamide. By virtue of disposing a layer (b) comprising (B) a semi-aromatic polyamide, a multilayer hose for the transportation of a high-temperature liquid and/or gas chemical, excellent in the liquid and/or gas chemical permeation-preventing property can be obtained.

In the multilayer hose for the transportation of a high-temperature liquid and/or gas chemical of the present invention, the thickness of each layer is not limited and may be controlled according to the kind of the polymer constituting the layer, the total number of layers in the multilayer hose for the transportation of a high-temperature liquid and/or gas chemical, or the like, but the thickness of each layer is determined by taking account of the properties of the multilayer hose for the transportation of a high-temperature liquid and/or gas chemical, such as low-temperature impact resistance and flexibility. In general, the thickness of each of the layers (a) and (b) is preferably 3 to 97% based on the thickness of the entire multilayer hose for the transportation of a high-temperature liquid and/or gas chemical. In view of the liquid and/or gas chemical permeation-preventing property, the thickness of the layer (b) is more preferably from 5 to 80%, still more preferably from 10 to 50%, based on the thickness of the entire multilayer hose for the transportation of a high-temperature liquid and/or gas chemical.

In the multilayer hose for the transportation of a high-temperature liquid and/or gas chemical of the present invention, a layer comprising a resin composition having blended therein an electrically conducting filler is preferably disposed as the innermost layer so that when the multilayer hose is used for piping hose or the like of various liquid chemicals, the liquid chemical can be prevented from catching fire as a result of accumulation of static electricity generated due to internal friction of the liquid chemical circulating in the pipe or due to friction against the pipe wall. By virtue of the electrically conducting filler, explosion due to static electricity generated at the transportation of a fluid such as liquid chemical can be prevented. At this time, when a layer not having electrical conductivity is disposed on the outer side with respect to the electrically conducting layer, the low-temperature impact resistance and the electrical conductivity both can be attained and this is advantageous in view of profitability.

The electrically conducting filler includes all fillers added for imparting electrically conducting performance to a resin, and examples thereof include particulate, flaked or fibrous fillers.

Examples of the particulate filler include carbon black and graphite. Examples of the flaked filler which can be suitably used include aluminum flake, nickel flake and nickel-coated mica. Examples of the fibrous filler include carbon fiber, carbon-coated ceramic fiber, carbon whisker, carbon nanotube and metal fiber such as aluminum fiber, copper fiber, brass fiber and stainless steel fiber. Among these, carbon nanotube and carbon black are preferred.

The carbon nanotube is called a hollow carbon fibril. The hollow carbon fibril has an outside region comprising a large number of substantially continuous layers of regularly arranged carbon atoms, and an inside hollow region, and this is a substantially columnar fibril where respective layers and the hollow region are disposed substantially in a concentric manner around a cylindrical axis. Furthermore, the regularly arranged carbon atoms in the outside region are in the graphite state, and the diameter of the hollow region is preferably from 2 to 20 nm. The outer diameter of the carbon nanotube is preferably from 3.5 to 70 nm, more preferably from 4 to 60 nm. If the outer diameter is less than the above-described value, this may give rise to poor dispersibility into a resin, whereas if it exceeds the above-described value, the obtained resin form may have poor electrical conductivity. The aspect ratio (this means a ratio of length/outer diameter) of the carbon nanotube is preferably 5 or more, more preferably 100 or more, still more preferably 500 or more. By satisfying this aspect ratio, formation of an electrically conducting network is facilitated, and excellent electrical conductivity can be provided by an addition in a small amount.

The carbon black includes all carbon blacks generally used for imparting electrical conductivity. Preferred examples of the carbon black include, but are not limited to, acetylene black obtained by the incomplete combustion of an acetylene gas, Ketjen black produced by the furnace-type incomplete combustion starting from a crude oil, oil black, naphthalene black, thermal black, lamp black, channel black, roll black and disk black. Among these, acetylene black and furnace black (Ketjen black) are more preferred.

As for the carbon black, various carbon powders differing in the properties such as particle diameter, surface area, DBP absorption and ash content are being produced. The carbon black usable in the present invention is not particularly limited in these properties, but those having a good chain structure and a large aggregation density are preferred. In view of impact resistance, the carbon black is preferably not blended in a large amount. From the standpoint of obtaining excellent electrical conductivity with a smaller amount, the average particle diameter is preferably 500 nm or less, more preferably from 5 to 100 nm, still more preferably from 10 to 70 nm, the surface area (by BET method) is preferably 10 $m^2$/g or more, more preferably 300 $m^2$/g or more, still more preferably from 500 to 1,500 $m^2$/g, the DBP (dibutyl phthalate) absorption is preferably 50 ml/100 g or more, more preferably 100 ml/100 g or more, still more preferably 300 ml/100 g or more, and the ash content is preferably 0.5 wt% or less, more preferably 0.3 wt% or less. The DBP absorption as used herein means a value measured by the method prescribed in ASTM D-2414. A carbon black having a volatile content of less than 1.0 wt% is more preferred.

The electrically conducting filler may be surface-treated with a surface-treating agent such as a titanate type, an aluminum type or a silane type. In addition, a granulated electrically conducting filler may also be used so as to enhance the melt kneading workability.

The amount of the electrically conducting filler blended varies depending on the kind of the electrically conducting filler used and cannot be indiscriminately specified but, generally, and in view of balance of the electrical conductivity with flowability, mechanical strength and the like, the blending amount is preferably from 3 to 30 parts by weight per 100 parts by weight of the resin component.

Also, from the standpoint of obtaining a sufficiently high antistatic performance, the electrically conducting filler is preferably blended such that the melt-extruded product has a surface resistivity value of $10^8$ $\Omega$/square or less, more preferably $10^6$ $\Omega$/square or less. However, the blending of the electrically conducting filler is liable to incur lowering of strength and flowability and therefore, if the objective electrical conductivity level can be achieved, the amount of the electrically conducting filler blended is preferably as small as possible.

The total number of layers in the multilayer hose for the transportation of high-temperature liquid and/or gas chemical of the present invention is not particularly limited and may be any number of layers as long as at least two layers including a layer (a) comprising (A) an aliphatic polyamide and a layer (b) comprising (B) a semi-aromatic polyamide are provided. In the multilayer hose for the transportation of high-temperature liquid and/or gas chemical of the present invention, one layer or two or more layers comprising other thermoplastic resin may be provided so as to impart an additional function or obtain a multilayer hose advantageous in view of profitability.

Examples of the other thermoplastic resin in the layer comprising other thermoplastic resin include a polyolefin-based resin such as high-density polyethylene (HDPE), medium-density polyethylene (MDPE), low-density polyethylene (LDPE), linear low-density polyethylene (LLDPE), ultrahigh molecular weight polyethylene (UHMWPE), polypropylene (PP), ethylene/propylene copolymer (EPR), ethylene/butene copolymer (EBR), ethylene/vinyl acetate copolymer (EVA), ethylene/vinyl acetate copolymer saponified product (EVOH), ethylene/acrylic acid copolymer (EAA), ethylene/methacrylic acid copolymer (EMAA), ethylene/methyl acrylate copolymer (EMA), ethylene/methyl methacrylate copolymer (EMMA) and ethylene/ethyl acrylate copolymer (EEA); a polyolefin-based resin obtained by modifying the above-described polyolefin-based resin with a compound or the like having a carboxyl group (e.g., acrylic acid, methacrylic acid, maleic acid, fumaric acid, itaconic acid, crotonic acid, mesaconic acid, citraconic acid, glutaconic acid, cis-4-cyclohexene-1,2-dicarboxylic acid, endo-bicyclo[2.2.1]-5-heptene-2,3-dicarboxylic acid) or its metal salt (Na, Zn, K, Ca, Mg), an acid anhydride group (e.g., malic anhydride, itaconic anhydride, citraconic anhydride, endo-bicyclo[2.2.1]-5-heptene-2,3-dicarboxylic anhydride), or an epoxy group (e.g., glycidyl acrylate, glycidyl methacrylate, glycidyl ethacrylate, glycidyl itaconate, glycidyl citraconate); a polyester-based resin such as polybutylene terephthalate (PBT), polyethylene terephthalate (PET), polyethylene isophthalate (PEI), PET/PEI copolymer, polyarylate (PAR), polybutylene naphthalate (PBN), polyethylene naphthalate (PEN) and liquid crystal polyester (LCP); a polyether-based resin such as polyacetal (POM) and polyphenylene oxide (PPO); a polysulfone-based resin such as polysulfone (PSF) and polyether sulfone (PES); a polythioether-based resin such as polyphenylene sulfide (PPS) and polythioethersulfone (PTES); a polyketone-based resin such as polyether ether ketone (PEEK) and polyallyl ether ketone (PAEK); a polynitrile-based resin such as polyacrylonitrile (PAN), polymethacrylonitrile, acrylonitrile/styrene copolymer (AS), methacrylonitrile/styrene copolymer, acrylonitrile/butadiene/styrene copolymer (ABS) and methacrylonitrile/styrene/butadiene copolymer (MBS); a polymethacrylate-based resin such as polymethyl methacrylate (PMMA) and polyethyl methacrylate (PEMA); a polyvinyl ester-based resin such as polyvinyl acetate (PVAc); a polyvinyl chloride-based resin such as polyvinylidene chloride (PVDC), polyvinyl chloride (PVC), vinyl chloride/vinylidene chloride copolymer and vinylidene chloride/methyl acrylate copolymer; a cellulose-based resin such as cellulose acetate and cellulose butyrate; fluorine-based resin such as polyvinylidene fluoride (PVDF), polyvinyl fluoride (PVF), ethylene/tetrafluoroethylene copolymer (ETFE), polychlorotrifluoroethylene (PCTFE), ethylene/chlorotrifluoroethylene copolymer (ECTFE), tetrafluoroethylene/hexafluoropropylene copolymer (TFE/HFP, FEP), tetrafluoroethylene/hexafluoropropylene/vinylidene fluoride copolymer (TFE/HFP/VDF, THV) and tetrafluoroethylene/fluoro(alkylvinylether) copolymer (PFA); a polycarbonate-based resin such as polycarbonate (PC); a polyimide-based resin such as thermoplastic polyimide (PI), polyamideimide (PAI) and polyether imide; a thermoplastic polyurethane-based resin; and a polyamide-based resin except for the (A) aliphatic polyamide and (B) semi-aromatic polyamide specified in the present invention, such as polymetaxylylene adipamide (polyamide MXD6), polymetaxylylene suberamide (polyamide MXD8), polymetaxylylene azelamide (polyamide MXD9), polymetaxylylene sebacamide (polyamide MXD10), polymetaxylylene dodecamide (polyamide MXD12), polymetaxylylene terephthalamide (polyamide MXDT), polymetaxylylene isophthalamide (polyamide MXDI), polymetaxylylene naphthalamide (polyamide MXDN), polybis(4-aminocyclohexyl)methane dodecamide (polyamide PACM12), polybis(4-aminocyclohexyl)methane terephthalamide (polyamide PACMT), polybis(4-aminocyclohexyl)methane isophthalamide (polyamide PACMI), polybis(3-methyl-4-aminocyclohexyl)methane dodecamide (polyamidedimethyl PACM12), polyisophorone adipamide (polyamide IPD6), polyisophorone terephthalamide (polyamide IPDT), polyhexamethylene terephthalamide (polyamide 6T), polyhexamethylene isophthalamide (polyamide 6I), polynonamethylene isophthalamide (polyamide 9I), polynonamethylene hexahydroterephthalamide (polyamide 9T(H)), polydecamethylene isophthalamide (polyamide 10I), polydecamethylene hexahydroterephthalamide (polyamide 10T(H)), polyundecamethylene isophthalamide (polyamide 11I), polyundecamethylene hexahydroterephthalamide (polyamide 11T(H)), polydodecamethylene isophthalamide (polyamide 12I), polydodecamethylene hexahydroterephthalamide (polyamide 12T(H)), and a copolymer using a plurality of species of raw material monomers of these polyamides. Among these, a polyolefin-based resin, a polyester-based resin, a polyamide-based resin, a polythioether-based resin and a fluorine-based resin are preferred, a polyolefin-based resin, a polyester-based resin, a polyamide-based resin and a fluorine-based resin are more preferred, and a polyamide-based resin and a fluorine-based resin are still more preferred.

Furthermore, an arbitrary base material other than the thermoplastic resin, such as paper, metal-based material, unstretched or uniaxially or biaxially stretched plastic film or sheet, woven fabric, non-woven fabric, metal cotton and wood material, may also be laminated. Examples of the metal-based material include a metal or metal compound such as aluminum, iron, copper, nickel, gold, silver, titanium, molybdenum, magnesium, manganese, lead, tin, chromium, beryllium, tungsten and cobalt, and alloys comprising two or more species thereof, such as alloy steel (e.g., stainless steel), aluminum alloy, copper alloy (e.g., brass, bronze) and nickel alloy.

The number of layers in the multilayer hose for the transportation of high-temperature liquid and/or gas chemical of the present invention is 2 or more, but in view of mechanism of producing apparatus for the multilayer hose for the transportation of high-temperature liquid and/or gas chemical, the number of layers is preferably 7 or less, more preferably from 2 to 5, still more preferably from 2 to 4. Also, in the multilayer hose for the transportation of high-temperature liquid and/or gas chemical of the present invention, from the standpoint of enhancing the interlayer adhesion, the layer (a) and the layer (b) are preferably adjacent to each other.

Examples of the method for producing the multilayer hose for the transportation of high-temperature liquid and/or gas chemical of the present invention include a method of melt-extruding the materials by using extruders corresponding to the number of layers or the number of materials and simultaneously laminating the layers in the inside or outside of a die (coextrusion method), and a method of once producing a single-layer tube or previously producing a multilayer hose for the transportation of high-temperature liquid and/or gas chemical by the above-described method and then sequentially integrating and laminating the resins on the outer side by using, if desired, an adhesive (coating method). The multilayer hose for the transportation of high-temperature liquid and/or gas chemical of the present invention is preferably produced by a coextrusion method where (A) an aliphatic polyamide and (B) a semi-aromatic polyamide are coextrusion-shaped in the melted state and both are heat-fused (melt-bonded) to produce a hose having a multilayer structure in one step.

In the case where the obtained multilayer hose for the transportation of high-temperature liquid and/or gas chemical has a complicated shape or is formed into a shaped article by applying heat bending after the shaping, the objective shaped article may also be obtained by heat-treating the formed multilayer hose for the transportation of high-temperature liquid and/or gas chemical at a temperature less than the lowest melting point among melting points of the resins constituting said multilayer hose for 0.01 to 10 hours so as to remove the residual strain in the shaped article.

The multilayer hose for the transportation of high-temperature liquid and/or gas chemical of the present invention may have an undulation region. The undulation region means a region formed into a shape of wave, bellows, accordion, corrugation or the like. The undulation region may be provided over the entire length of the multilayer hose for the transportation of high-temperature liquid and/or gas chemical or may be partially provided in an appropriate middle portion. The undulated region can be easily formed by shaping a straight tube and subsequently mold-shaping it to have a predetermined undulated form or the like. By virtue of having such an undulated region, an impact-absorbing property is imparted and the fixing operation is facilitated. Furthermore, for example, necessary parts may be attached or formation into L-shape or U-shape may be attained by bending.

By taking account of pebbling, abrasion with other parts and flame resistance, the outer circumference of the thus-shaped multilayer hose for the transportation of high-temperature liquid and/or gas chemical may be entirely or partially provided with a solid or sponge-like protective member (protector) formed of epichlorohydrin rubber (ECO), acrylonitrile/butadiene rubber (NBR), an NBR and polyvinyl chloride mixture, chlorosulfonated polyethylene rubber, chlorinated polyethylene rubber, acrylic rubber (ACM), chloroprene rubber (CR), ethylene/propylene rubber (EPR), ethylene/propylene/diene rubber (EPDM), an NBR and EPDM mixture rubber, or a thermoplastic elastomer such as vinyl chloride type, olefin type, ester type and amide type. The protective member may be formed as a sponge-like porous material by a known method. By forming as a porous material, a lightweight and highly adiabatic protective part can be provided. Also, the material cost can be reduced. Alternatively, the strength of the protective member may be improved by adding glass fiber or the like. The shape of the protective member is not particularly limited, but a cylindrical member or a block member having a recess for receiving the multilayer hose is usually used. In the case of a cylindrical member, the multilayer hose is inserted into a previously prepared cylindrical member, or a cylindrical member is coated by extrusion on the multilayer hose, thereby tightly contacting the cylindrical member and the multilayer hose. For bonding these two members, an adhesive is coated, if desired, on the inner surface or recess surface of the protective member and the multilayer hose is inserted or fitted thereinto to tightly contact these two members with each other, thereby forming a structure where the multilayer hose and the protective member are integrated. Also, reinforcement by a metal or the like may be applied.

The outer diameter of the multilayer hose for the transportation of high-temperature liquid and/or gas chemical is not limited but in view of flow rate of the circulating liquid and/or gas chemical (for example, engine cooling liquid) or the like, the wall thickness is designed to a thickness allowing for no increase in the liquid and/or gas chemical permeability, capable of maintaining the burst pressure in a level of a normal hose, and capable of maintaining flexibility to such an extent that the hose can be easily fixed and good vibration resistance is ensured on use. Preferably, the outer diameter is from 4 to 200 mm, the inner diameter is from 2 to 160 mm, and the wall thickness is from 0.5 to 20 mm.

The multilayer hose of the present invention is excellent in the liquid and/or gas chemical permeation-preventing property at high temperatures and the heat resistance and therefore, is useful as a hose for transporting a high-temperature liquid and/or gas chemical. In the present invention, the high-temperature liquid and/or gas chemical means a liquid and/or gas chemical which is in the state of 50°C or more, and indicates a liquid and/or gas chemical momentarily or continuously flowing or circulating in the multilayer hose at such a temperature.

Examples of the liquid chemical include an aromatic hydrocarbon-based solvent such as benzene, toluene and xylene, an alcohol- or phenol-based solvent such as methanol, ethanol, propanol, butanol, pentanol, ethylene glycol, propylene glycol, diethylene glycol, phenol, cresol, polyethylene glycol and polypropylene glycol, an ether-based solvent such as dimethyl ether, dipropyl ether, methyl-tert-butyl ether, dioxane and tetrahydrofuran, a halogen-based solvent such as chloroform, methylene chloride, trichloroethylene, ethylene dichloride, perchloroethylene, monochloroethane, dichloroethane, tetrachloroethane, perchloroethane and chlorobenzene, a ketone-based solvent such as acetone, methyl ethyl ketone, diethyl ketone and acetophenone, a urea solution, gasoline, kerosine, diesel gasoline, alcohol-containing gasoline, oxygen-containing gasoline, amine-containing gasoline, sour gasoline, caster oilbased brake fluid, glycol ether-type brake fluid, boric acid ester-type brake fluid, break fluid for very cold regions, silicone oil-type brake fluid, mineral oil-type brake fluid, power steering oil, hydrogen sulfide-containing oil, engine cooling liquid, window washer liquid, medicine, ink and coating material. In the present invention, an aqueous solution containing such a liquid chemical as a component is also included in the liquid chemical of the present invention.

Examples of the gas include Freon-11, Freon-12, Freon-21, Freon-22, Freon-113, Freon-114, Freon-115, Freon-134A, Freon-32, Freon-123, Freon-124, Freon-125, Freon-143A, Freon-141b, Freon-142b, Freon-225, Freon-C318, Freon-502, methyl chloride, ethyl chloride, air, oxygen, hydrogen, nitrogen, carbon dioxide, methane, propane, isobutane, n-butane, argon, helium and xenon.

The multilayer hose for the transportation of a high-temperature liquid and/or gas chemical of the present invention can be used as a feed hose, a return hose, an evaporation hose, a fuel filler hose, an ORVR hose, a reserve hose, a vent hose, an oil hose, a diesel gasoline hose, an oil drilling hose, an alcohol-containing gasoline hose, a brake hose, a window washer liquid hose, an engine cooling liquid (LLC) hose, a reservoir tank hose, a urea solution transportation hose, a cooler hose (for cooling water, cooling medium or the like), a cooling medium hose for air conditioner, a heater hose, a road heating hose, a floor heating hose, a supply hose of infrastructure, a hose for fire extinguisher or fire extinguishing equipment, a hose for medical cooling equipment, a hose for spraying ink or coating material, and a hose for other liquid chemicals or gas.

In particular, the multilayer hose is useful as an engine cooling liquid (LLC) hose, a diesel gasoline hose, an oil drilling hose, an alcohol-containing gasoline hose, a urea solution transportation hose, a heater hose, a reservor tank hose, a road heating hose and a floor heating hose, which are considered to be used under severe conditions.

EXAMPLES

The present invention is described in greater detail below by referring to Examples and Comparative Examples, but the present invention is not limited thereto.

In Examples and Comparative Examples, the analysis and measurement of physical properties were performed as follows.

[Relative Viscosity]

The relative viscosity was measured according to JIS K-6920 in 96% sulfuric acid under the conditions of a polyamide concentration of 1% and a temperature of 25°C.

[Evaluation of Physical Properties]

(Tensile Elongation)

This was evaluated by the method described in SAE J-2260 7.15.

(Low-Temperature Impact Resistance)

This was evaluated by the method described in DIN 73378 6.4.6.

(Burst Pressure Strength)

This was evaluated by the method described in SAE J-2260 7.1.

(Interlayer Adhesion)

A hose cut into 200 mm was further cut into a half in the longitudinal direction to prepare a test piece. The test piece was subjected to a 180° peel test at a pulling speed of 50 mm/min by using a Tensilon universal tester. The peel strength was read from the peak of S-S curve and the interlayer adhesion was evaluated.

(Engine Cooling Liquid (LLC) Resistance)

One end of a hose cut into 200 mm was plugged, an engine cooling liquid (LLC, ethylene glycol/water = 50/50 (by weight)) was charged into the inside, and the other end was also plugged. Thereafter, the test hose was placed in an oven at 120°C and heated for 3,000 hours. The hose after treatment was subjected to measurements of tensile elongation, low-temperature impact resistance, burst pressure strength and peel strength by the methods described above. As for the tensile elongation, the retention percentage was calculated according to the following formula:

```
(Retention percentage) = (tensile elongation of hose
after treatment)/(tensile elongation of hose before
treatment)×100 (%)
```

(Urea Solution Permeation-Preventing Property)

One end of a hose cut into 200 mm was plugged, a urea solution (urea/water = 32.5/67.5 by weight) was charged into the inside, and the other end was also plugged. Thereafter, the weight of the entirety was measured, then the test hose was placed in an oven at 110°C, and the change in weight was measured every day. The amount of urea solution permeated ($g/m^2 \cdot day$) was calculated by dividing the change in weight per day by the inner layer surface area of the hose.

[Materials Used in Examples and Comparative Examples]

(A) Aliphatic Polyamide

(A-1) Production of Polyamide 12 Resin Composition

A maleic anhydride-modified ethylene/propylene copolymer (JSR T7712SP, produced by JSR Corporation) as an impact resistance improver was previously mixed with polyamide 12 (UBESTA3030U, produced by Ube Industries, Ltd., relative viscosity: 2.27). While supplying the mixture to a twin-screw melt-kneading machine (manufactured by Japan Steel Works, Ltd., model: TEX44), benzenesulfonic acid butylamide as a plasticizer was fed by a quantitative pump in the middle of the cylinder of the twin-screw melt-kneading machine and melt-kneaded at a cylinder temperature of 180 to 260°C. The resulting resin melt was extruded as a strand, introduced into a water tank, cooled, cut and then vacuum-dried to obtain pellets of a polyamide 12 resin composition comprising 85 wt% of polyamide 12 resin, 10 wt% of impact resistance improver and 5 wt% of plasticizer (hereinafter, this polyamide resin composition is referred to as (A-1)).

(A-2) Production of Polyamide 66 Resin Composition

A maleic anhydride-modified ethylene/propylene copolymer (JSR T7712SP, produced by JSR Corporation) as an impact resistance improver and a hexamethylene terephthalamide/hexamethylene isophthalamide copolymer (polyamide 6T/6I) (Grivory G21, produced by EMS-Showa Denko K.K.) as a calcium chloride resistance improver were previously mixed with polyamide 66 (UBE Nylon 2026B, produced by Ube Industries, Ltd., relative viscosity: 3.36), and the mixture was supplied to a twin-screw melt-kneading machine (manufactured by Japan Steel Works, Ltd., model: TEX44) and melt-kneaded at a cylinder temperature of 200 to 290°C. The resulting resin melt was extruded as a strand, introduced into a water tank, cooled, cut and then vacuum-dried to obtain pellets of a polyamide 66 resin composition comprising 65 wt% of polyamide 66 resin, 15 wt% of impact resistance improver and 20 wt% of calcium chloride resistance improver (hereinafter, this polyamide resin composition is referred to as (A-2)).

(A-3) Production of Polyamide 6 Resin Composition

Pellets of a polyamide 6 resin composition comprising 65 wt% of polyamide 6 resin, 15 wt% of impact resistance improver and 20 wt% of calcium chloride resistance improver were obtained in the same manner as in the production of (A-2) Polyamide 66 Resin Composition except for changing the polyamide 66 (UBE Nylon 2026B, produced by Ube Industries, Ltd., relative viscosity: 3.36) to polyamide 6 (UBE Nylon 1030B, produced by Ube Industries, Ltd., relative viscosity: 4.08) and melt-kneading the mixture at a cylinder temperature of 200 to 260°C (hereinafter, this polyamide resin composition is referred to as (A-3)).

(B) Semi-Aromatic Polyamide

(B-1) Production of Semi-Aromatic Polyamide

Into an autoclave, 32,927 g (198.2 mol) of terephthalic acid, 15,829 g (100 mol) of 1,9-nonanediamine, 15,829 g (100 mol) of 2-methyl-1,8-octanediamine, 439.6 g (3.6 mol) of benzoic acid, 65 g of sodium hypophosphite monohydrate (0.1 wt% based on raw material) and 40 liter of distilled water were charged. Then, the system was purged with nitrogen.
The contents were stirred at 100°C for 30 minutes and the internal temperature was elevated to 210°C over 2 hours. At this time, the pressure in the autoclave was increased to 2.2 MPa. After continuing the reaction in this state for 1 hour, the temperature was elevated to 230°C, and the temperature was then kept at 230°C for 2 hours to allow the reaction to proceed while keeping the pressure at 2.2 MPa by gradually extracting the water vapor. Subsequently, the pressure was reduced to 1.0 MPa over 30 minutes, and the reaction was further allowed to proceed for 1 hour to obtain a prepolymer. This prepolymer was dried at 100°C for 12 hours under reduced pressure, ground to a size of 2 mm or less and then subjected to solid phase polymerization at 230°C under 0.013 kPa for 10 hours to obtain a polyamide having a melting point of 265°C and a relative viscosity of 2.80 (hereinafter this semi-aromatic polyamide resin is referred to as (B-1)).

(B-2) Production of Semi-Aromatic Polyamide

A polyamide having a melting point of 301°C and a relative viscosity of 2.55 was obtained in the same manner as in (B-1) Production of Semi-Aromatic Polyamide except that in (B-1) Production of Semi-Aromatic Polyamide, 15,829 g (100 mol) of 1,9-nonanediamine and 15,829 g (100 mol) of 2-methyl-1,8-octanediamine were changed to 40,073 g (200 mol) of 1,12-dodecanediamine (hereinafter this semi-aromatic polyamide is referred to as (B-2)).

(B-3) Production of Semi-Aromatic Polyamide

A semi-aromatic polyamide having a melting point of 275°C and a relative viscosity of 2.82 was obtained in the same manner as in the method of (B-1) Production of Semi-Aromatic Polyamide except that in (B-1) Production of Semi-Aromatic Polyamide, 32,927 g (198.2 mol) of terephthalic acid was changed to 42,848 g (198.2 mol) of 2,6-naphthalenedicarboxylic acid (hereinafter this semi-aromatic polyamide is referred to as (B-3)).

(B-4) Production of Semi-Aromatic Polyamide

Into an autoclave, 29,230 g (200 mol) of adipic acid, 27,376 g (201 mol) of metaxylylenediamine, 122.1 g (1.0 mol) of benzoic acid, 57 g of sodium hypophosphite monohydrate (0.1 wt% based on raw material) and 40 L of distilled water were charged. Then, the system was purged with nitrogen.
The contents were stirred at 100°C for 30 minutes and the internal temperature was elevated to 220°C over 2 hours. At this time, the pressure in the autoclave was increased to 1.9 MPa. After continuing the reaction in this state for 3 hours, the pressure was returned to atmospheric pressure over 1 hour and at the same time, the temperature was elevated to 265°C. When the internal temperature reached 265°C, the decompression was started and the reaction was allowed to proceed at 27 kPa for 2 hours. Subsequently, the pressure was recovered, and the molten polymer was extracted from the bottom of the autoclave and pelletized under cooling to obtain a polyamide having a melting point of 237°C and a relative viscosity of 2.42 (hereinafter this semi-aromatic polyamide is referred to as (B-4)).

(C) Polyolefin

(C-1) Crosslinking polyethylene

Moldex S-141, produced by Sumitomo Bakelite Co., Ltd.

(C-2) Modified polyolefin

Admer NF-500, produced by Mitsui Chemicals, Inc.

(D) Polyphenylene Sulfide

(D-1) polyphenylene sulfide (PPS)

Torelina A670X01, produced by Toray Industries, Inc.

(D-2) Production of Adhesive Resin Composition

(D) Polyphenylene sulfide (D-1) (Torelina A670X01, produced by Toray Industries, Inc.) and an ethylene/glycidyl methacrylate copolymer (Rexpearl RA3150, produced by Japan Polyolefin Corp.) were previously mixed with (A) polyamide 12 (UBESTA3030U, produced by Ube Industries, Ltd., relative viscosity: 2.27), and the mixture was supplied to a twin-screw melt-kneading machine (manufactured by Japan Steel Works, Ltd., model: TEX44) and melt-kneaded at a cylinder temperature of 180 to 300°C. The resulting resin melt was extruded as a strand, introduced into a water tank, cooled, cut and then vacuum-dried to obtain pellets of an adhesive resin composition comprising polyamide 12/polyphenylene sulfide/modified polyolefin = 40/55/5 (wt%) (hereinafter, this adhesive resin composition is referred to as (D-2)).

Example 1:

The above-described (A) polyamide 12 resin composition (A-1) and (B) semi-aromatic polyamide (B-1) were separately melted by using a two-layer hose forming machine (manufactured by Plabor Co., Ltd.) at an extrusion temperature of 250°C for (A) and an extrusion temperature of 300°C for (B), and the discharged resin melts were joined by means of an adapter and shaped into a multilayer tubular form. Subsequently, the shaped article was cooled by a sizing die capable of controlling the dimensions and withdrawn to obtain a multilayer hose having an inner diameter of 6 mm and an outer diameter of 8 mm and having a layer structure of (a)/(b)=0.75/0.25 mm consisting of a layer (a) comprising (A) polyamide 12 resin composition (A-1) (outer layer) and a layer (b) comprising (B) semi-aromatic polyamide (B-1) (inner layer). The physical properties of this multilayer hose were measured and the results obtained are shown in Table 1.

Example 2:

A multilayer hose having a layer structure shown in Table 1 was obtained in the same manner as in Example 1 except that in Example 1, the (B) semi-aromatic polyamide (B-1) was changed to (B-2) and (B) was melted at an extrusion temperature of 320°C. The physical properties of this multilayer hose were measured and the results obtained are shown in Table 1.

Reference Example 3:

A multilayer hose having a layer structure shown in Table 1 was obtained in the same manner as in Example 1 except that in Example 1, the (B) semi-aromatic polyamide (B-1) was changed to (B-3) and (B) was melted at an extrusion temperature of 310°C. The physical properties of this multilayer hose were measured and the results obtained are shown in Table 1.

Example 4:

A multilayer hose having a layer structure shown in Table 1 was obtained in the same manner as in Example 1 except that in Example 1, the (A) aliphatic polyamide (A-1) was changed to (A-2) and (A) was melted at an extrusion temperature of 280°C. The physical properties of this multilayer hose were measured and the results obtained are shown in Table 1.

Example 5:

A multilayer hose having a layer structure shown in Table 1 was obtained in the same manner as in Example 1 except that in Example 1, the (A) aliphatic polyamide (A-1) was changed to (A-3) and (A) was melted at an extrusion temperature of 260°C. The physical properties of this multilayer hose were measured and the results obtained are shown in Table 1.

Example 6:

The above-described (A) polyamide 12 resin composition (A-1) and (B) semi-aromatic polyamide (B-1) were separately melted by using a three-layer hose forming machine (manufactured by Plabor Co., Ltd.) at an extrusion temperature of 250°C for (A) and an extrusion temperature of 300°C for (B), and the discharged resin melts were joined by means of an adapter and shaped into a multilayer tubular form. Subsequently, the shaped article was cooled by a sizing die capable of controlling the dimension and withdrawn to obtain a multilayer hose having an inner diameter of 6 mm and an outer diameter of 8 mm and having a layer structure of (b)/(a)/(b)=0.125/0.75/0.125 mm consisting of a layer (a) comprising (A) a polyamide 12 resin composition (A-1) (intermediate layer), and layers (b) comprising (B) a semi-aromatic polyamide (B-1) (inner and outer layers). The physical properties of this multilayer hose were measured and the results obtained are shown in Table 1. Comparative Example 1:

A single-layer hose having a layer structure shown in Table 1 was obtained in the same manner as in Example 1 except that in Example 1, the (B) semi-aromatic polyamide (B-1) was not used. The physical properties of this single-layer hose were measured and the results obtained are shown in Table 1.

Comparative Example 2:

A single-layer hose having a layer structure shown in Table 1 was obtained in the same manner as in Example 1 except that in Example 1, the (A) polyamide 12 resin composition (A-1) was not used. The physical properties of this multi-layer hose were measured and the results obtained are shown in Table 1.

Comparative Example 3:

A multilayer hose having a layer structure shown in Table 1 was obtained in the same manner as in Example 5 except that in Example 5, the (B) semi-aromatic polyamide (B-1) was changed to (B-4). The physical properties of this single-layer hose were measured and the results obtained are shown in Table 1.

Comparative Example 4:

The above-described (A) polyamide 12 resin composition (A-1) and (C) crosslinking polyolefin (C-1) and modified polyolefin (C-2) were separately melted by using a three-layer hose forming machine (manufactured by Plabor Co., Ltd.) at an extrusion temperature of 250°C for (A) and an extrusion temperature of 200°C for (C), and the discharged resin melts were joined by means of an adapter and shaped into a multilayer tubular form. Subsequently, the shaped article was cooled by a sizing die capable of controlling the dimension, withdrawn and dipped in a water vapor tank set to 150°C and a pressure of 0.4 MPa for 3 minutes, thereby performing a water-crosslinking treatment, to obtain a multilayer hose having an inner diameter of 6 mm and an outer diameter of 8 mm and having a layer structure of (a)/(c)/(c')=0.65/0.10/0.25 mm consisting of a layer (a) comprising (A) polyamide 12 resin composition (A-1) (outer layer), a layer (c) comprising (C) modified polyolefin (C-2) (intermediate layer) and a layer (c') comprising (C) crosslinking polyethylene (C-1) (inner layer). The physical properties of this multilayer hose were measured and the results obtained are shown in Table 1.

Comparative Example 5:

The above-described (A) polyamide 12 resin composition (A-1), (D) polyphenylene sulfide (D-1) and (D) adhesive resin composition (D-2) were separately melted by using a three-layer hose forming machine (manufactured by Plabor Co., Ltd.) at an extrusion temperature of 250°C for (A) and an extrusion temperature of 300°C for (D), and the discharged resin melts were joined by means of an adapter and shaped into a multilayer tubular form. Subsequently, the shaped article was cooled by a sizing die capable of controlling the dimension and withdrawn to obtain a multilayer hose having an inner diameter of 6 mm and an outer diameter of 8 mm and having a layer structure of (a)/(d)/(d')=0.75/0.10/0.15 mm consisting of a layer (a) comprising (A) polyamide 12 (A-1) resin composition (outer layer), a layer (d) comprising (D) adhesive resin composition (D-2) (intermediate layer) and a layer (d') comprising (D) polyphenylene sulfide (D-1) (inner layer). The physical properties of this multilayer hose were measured and the results obtained are shown in Table 1.

Table 1

| | Outer Layer | | Intermediate Layer | | Inner Layer | | Tensile Elongation [%] (retention Percentage [%]) | | Low-Temperature Impact Resistance [number of ruptured tubes/number of tested tubes] | | Burst Pressure Strength [MPa] | | Peel Strength [N/cm] | | Amount of Urea Solution Permeated [g/m$^2\cdot$day] |
|---|---|---|---|---|---|---|---|---|---|---|---|---|---|---|---|
| | Kind | Thickness [mm] | Kind | Thickness [mm] | Kind | Thickness [mm] | Initial | After LLC Treatment | Initial After Initial | LLC Treatment | Initial | After LLC Treatment | Initial | After LLC Treatment | |
| Example 1 | A-1 | 0.75 | - | - | B-1 | 0.25 | 203 | 193 (95) | 0/10 | 0/10 | 9.2 | 9.8 | 45 | 25 | 29 |
| Example 2 | A-1 | 0.75 | - | - | B-2 | 0.25 | 208 | 204 (98) | 0/10 | 0/10 | 9.0 | 9.5 | not peeled | 46 | 35 |
| Ref.-Ex.3 3 | A-1 | 0.75 | - | - | B-3 | 0.25 | 198 | 190 (96) | 0/10 | 0/10 | 9.5 | 10.2 | 43 | 23 | 7 |
| Example 4 | A-2 | 0.75 | - | - | B-1 | 0.25 | 210 | 195 (93) | 0/10 | 0/10 | 11.2 | 11.4 | 42 | 24 | 42 |
| Example 5 | A-3 | 0.75 | - | - | B-1 | 0.25 | 205 | 187 (91) | 0/10 | 0/10 | 10.8 | 11.0 | 46 | 22 | 44 |
| Example 6 | B-1 | 0.125 | A-1 | 0.75 | B-1 | 0.125 | 195 | 187 (96) | 0/10 | 0/10 | 9.3 | 9.9 | 44 | 21 | 27 |
| Comparative Example 1 | A-1 | 1.00 | - | - | - | - | 241 | 166 (69) | 0/10 | 7/10 | 8.3 | 10.1 | - | - | 150 |
| Comparative Example 2 | - | - | - | - | B-1 | 1.00 | 184 | 180 (98) | 10/10 | 10/10 | 17.8 | 21.2 | - | - | 9 |
| Comparative Example 3 | A-3 | 0.75 | - | - | B-4 | 0.25 | 205 | 133 (65) | 8/10 | 10/10 | 13.4 | 15.4 | not peeled | 52 | 75 |
| Comparative Example 4 | A-1 | 0.65 | C-2 | 0.10 | C-1 | 0.25 | 232 | 174 (75) | 0/10 | 2/10 | 8.5 | 10.0 | 39 | 8 | 18 |
| Comparative Example 5 | A-1 | 0.75 | D-2 | 0.10 | D-1 | 0.15 | 195 | 191 (98) | 2/10 | 5/10 | 10.2 | 11.5 | 28 | 5 | 8 |

INDUSTRIAL APPLICABILITY

The multilayer hose of the present invention is excellent in the liquid and/or gas chemical permeation-preventing property at high temperatures and in heat resistance and, therefore, is useful as a hose for the transportation of a high-temperature liquid and/or gas chemical. The multilayer hose for the transportation of a high-temperature liquid and/or gas chemical is particularly useful as an engine cooling liquid (LLC) hose, a diesel gasoline hose, an oil drilling hose, an alcohol-containing gasoline hose, a urea solution transportation hose, a heater hose, a reservoir tank hose, a road heating hose and a floor heating hose.

**Claims**

1. A multilayer hose for the transportation of a high-temperature liquid and/or gas chemical at a temperature of 50 °C or more, comprising at least two or more layers including:

   a layer (a) comprising (A) an aliphatic polyamide, and
   a layer (b) comprising (B) a semi-aromatic polyamide which comprises a diamine unit containing an aliphatic diamine unit having a carbon number of 9 to 13 in an amount of 60 mol% or more based on all diamine units and a dicarboxylic acid unit containing a terephthalic acid unit in an amount of 50 mol% or more based on all dicarboxylic acid units,

   wherein the layers are formed by coextrusion, and
   wherein the multilayer hose does not comprise a layer comprising a fluorine-containing polymer having introduced into the molecular chain thereof a functional group having reactivity with a polyamide-based resin.

2. The multilayer hose for the transportation of a high-temperature liquid and/or gas chemical as claimed in claim 1, wherein the layer (b) comprising (B) a semi-aromatic polyamide which comprises a diamine unit containing an aliphatic diamine unit having a carbon number of 9 to 13 in an amount of 60 mol% or more based on all diamine units and a dicarboxylic acid unit containing a terephthalic acid unit in an amount of 50 mol% or more based on all dicarboxylic acid units is disposed as the innermost layer, and the layer (a) comprising (A) an aliphatic polyamide is disposed on the outer side with respect to the layer (b).

3. The multilayer hose for the transportation of a high-temperature liquid and/or gas chemical as claimed in claim 1 or 2, wherein the (A) aliphatic polyamide is at least one homopolymer selected from the group consisting of polycaproamide (polyamide 6), polyhexamethylene adipamide (polyamide 66), polyhexamethylene dodecamide (polyamide 612), polyundecanamide (polyamide 11) and polydodecanamide (polyamide 12), or a copolymer using a plurality of species of raw material monomers forming these polyamides.

4. The multilayer hose for the transportation of a high-temperature liquid and/or gas chemical as claimed in any of claims 1 to 3, wherein the (B) semi-aromatic polyamide is a polyamide comprising a diamine unit containing a 1,9-nonanediamine and/or 2-methyl-1,8-octanediamine unit or a 1,12-dodecanediamine unit in an amount of 60 mol% or more based on all diamine units and a dicarboxylic acid unit containing a terephthalic acid unit in an amount of 50 mol% or more based on all dicarboxylic acid units.

5. The multilayer hose for the transportation of a high-temperature liquid and/or gas chemical as claimed in any of claims 1 to 4, which is any one of an engine cooling liquid (LLC) hose, a diesel gasoline hose, an oil drilling hose, an alcohol-containing gasoline transportation hose and a urea solution transportation hose.

**Patentansprüche**

1. Mehrlagiger Schlauch für den Transport einer heißen flüssigen und/oder gasförmigen Chemikalie bei einer Temperatur von 50 °C oder mehr, umfassend mindestens zwei oder mehr Lagen umfassend:

   eine Lage (a) umfassend (A) ein aliphatisches Polyamid, und
   eine Lage (b) umfassend (B) ein semi-aromatisches Polyamid umfassend eine Diamin-Einheit enthaltend eine aliphatische Diamin-Einheit mit einer Kohlenstoffanzahl von 9 bis 13 in einer Menge von 60 Mol% oder mehr, basierend auf allen Diamin-Einheiten, und eine Dicarbonsäure-Einheit enthaltend eine Terephthalsäure-Einheit in einer Menge von 50 Mol% oder mehr, basierend auf allen Dicarbonsäure-Einheiten,

wobei die Lagen durch Coextrusion gebildet sind, und
wobei der mehrlagige Schlauch keine Lage umfasst, die ein Fluor enthaltendes Polymer umfasst, in dessen Molekülkette eine funktionelle Gruppe mit Reaktivität gegenüber einem Polyamid-basierenden Harz eingefügt ist.

2. Mehrlagiger Schlauch für den Transport einer heißen flüssigen und/oder gasförmigen Chemikalie nach Anspruch 1, wobei die Lage (b) umfassend (B) ein semi-aromatisches Polyamid umfassend eine Diamin-Einheit enthaltend eine aliphatische Diamin-Einheit mit einer Kohlenstoffanzahl von 9 bis 13 in einer Menge von 60 Mol% oder mehr, basierend auf allen Diamin-Einheiten, und eine Dicarbonsäure-Einheit enthaltend eine Terephthalsäure-Einheit in einer Menge von 50 Mol% oder mehr, basierend auf allen Dicarbonsäure-Einheiten, als die innerste Lage angeordnet ist, und wobei die Lage (a) umfassend (A) ein aliphatisches Polyamid auf der Außenseite in Bezug auf die Lage (b) angeordnet ist.

3. Mehrlagiger Schlauch für den Transport einer heißen flüssigen und/oder gasförmigen Chemikalie nach Anspruch 1 oder 2, wobei das (A) aliphatische Polyamid mindestens ein Homopolymer ist, das ausgewählt ist aus der Gruppe bestehend aus Polycaproamid (Polyamid 6), Polyhexa-methylenadipamid (Polyamid 66), Polyhexamethylendodecamid (Polyamid 612), Polyundecanamid (Polyamid 11) und Polydodecanamid (Polyamid 12), oder ein Copolymer, das eine Mehrzahl von Spezies von Ausgangsmonomeren verwendet, die diese Polyamide bilden.

4. Mehrlagiger Schlauch für den Transport einer heißen flüssigen und/oder gasförmigen Chemikalie nach einem der Ansprüche 1 bis 3, wobei das (B) semi-aromatische Polyamid ein Polyamid ist, das eine Diamin-Einheit umfasst, die eine 1,9 Nonandiamin- und/oder 2-Methyl-1,8-octandiamin-Einheit oder eine 1,12-Dodecandiamin-Einheit in einer Menge von 60 Mol% oder mehr enthält, basierend auf allen Diamin-Einheiten, und eine Dicarobsäure-Einheit enthaltend eine Terephthalsäure-Einheit in einer Menge von 50 Mol% oder mehr, basierend auf allen Dicarbonsäure-Einheiten.

5. Mehrlagiger Schlauch für den Transport einer heißen flüssigen und/oder gasförmigen Chemikalie nach einem der Ansprüche 1 bis 4, welcher ausgewählt ist aus einem Schlauch für Motorkühlflüssigkeit, einem Dieselkraftstoffschlauch, einem Ölbohrschlauch, einem Transportschlauch für Alkohol enthaltenden Kraftstoff und einem Transportschlauch für Harnstofflösung.

**Revendications**

1. Tuyau flexible multicouche pour le transport d'une substance chimique liquide et/ou gazeuse à haute température à une température de 50 °C ou plus, comprenant au moins deux couches ou plus comprenant :

une couche (a) comprenant (A) un polyamide aliphatique, et
une couche (b) comprenant (B) un polyamide semi-aromatique qui comprend un motif diamine contenant un motif diamine aliphatique ayant un nombre de carbones de 9 à 13 en une quantité de 60 % en moles ou plus sur la base de la totalité des motifs diamine et un motif acide dicarboxylique contenant un motif acide téréphtalique en une quantité de 50 % en moles ou plus sur la base de la totalité des motifs acide dicarboxylique,

dans lequel les couches sont formées par coextrusion, et le tuyau flexible multicouche ne comprenant pas une couche comprenant un polymère contenant du fluor dans lequel un groupe fonctionnel ayant une réactivité avec une résine à base de polyamide est introduit dans la chaîne moléculaire de celui-ci.

2. Tuyau flexible multicouche pour le transport d'une substance chimique liquide et/ou gazeuse à haute température selon la revendication 1, dans lequel la couche (b) comprenant (B) un polyamide semi-aromatique qui comprend un motif diamine contenant un motif diamine aliphatique ayant un nombre de carbones de 9 à 13 en une quantité de 60 % en moles ou plus sur la base de la totalité des motifs diamine et un motif acide dicarboxylique contenant un motif acide téréphtalique en une quantité de 50 % en moles ou plus sur la base de la totalité des motifs acide dicarboxylique est disposée en tant que couche intérieure, et la couche (a) comprenant (A) un polyamide aliphatique est disposée sur le côté externe par rapport à la couche (b).

3. Tuyau flexible multicouche pour le transport d'une substance chimique liquide et/ou gazeuse à haute température selon la revendication 1 ou 2, dans lequel le (A) polyamide aliphatique est au moins un homopolymère choisi dans le groupe constitué de polycaproamide (polyamide 6), polyhexaméthylène-adipamide (polyamide 66), polyhexaméthylènedodécamide (polyamide 612), polyundécanamide (polyamide 11) et polydodécanamide (polyamide 12), ou un copolymère utilisant une pluralité d'espèces de monomères de matière première formant ces polyamides.

4. Tuyau flexible multicouche pour le transport d'une substance chimique liquide et/ou gazeuse à haute température selon l'une quelconque des revendications 1 à 3, dans lequel le (B) polyamide semi-aromatique est un polyamide comprenant un motif diamine contenant un motif 1,9-nonanediamine et/ou 2-méthyl-1,8-octanediamine ou un motif 1,12-dodécanediamine en une quantité de 60 % en moles ou plus sur la base de la totalité des motifs diamine et un motif acide dicarboxylique contenant un motif acide téréphtalique en une quantité de 50 % en moles ou plus sur la base de la totalité des motifs acide dicarboxylique.

5. Tuyau flexible multicouche pour le transport d'une substance chimique liquide et/ou gazeuse à haute température selon l'une quelconque des revendications 1 à 4, qui est l'un quelconque d'un tuyau flexible de liquide de refroidissement de moteur (LLC), un tuyau flexible de carburant diesel, un tuyau flexible de puits de pétrole, un tuyau flexible de transport d'essence contenant de l'alcool et un tuyau flexible de transport de solution d'urée.

# Fig. 1

# Fig. 2

**EP 1 741 549 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 10180911 A
- EP 1695817 A1
- EP 1197699 A2